# EUROPEAN PATENT APPLICATION

(11) **EP 2 487 586 A1**
(43) Date of publication of application: **15.08.2012**
(21) Application number: 10852762.3
(22) Date of filing: 15.10.2010
(51) Int. Cl.: G06F 9/445

(54) **METHOD AND SYSTEM FOR TERMINAL DEVICE INSTALLATION**

(30) Priority: 12.06.2010 CN 201010206628
(71) Applicant: ZTE Corporation, Shenzhen, Guangdong 518057 (CN)
(72) Inventor: ZHANG, Jing, Shenzhen, Guangdong 518057 (CN)
(74) Representative: Novagraaf Technologies
(86) International application number: PCT/CN2010/077802
(87) International publication number: WO 2011/153770

(57) **Abstract**

The present invention discloses a method and a system for installing terminal equipment. The method includes that: after a host detects that the terminal equipment with a storage card is connected, the storage card is enumerated as a U disk device; if the host detects that installation files of PC applications and drivers stored in the storage card have not been installed, the host starts installation of installation files. In the present invention, if the installation files of PC applications and drivers have been stored in the storage card, the host enumerates the storage card as a U disk directly and reports it, so as to realize auto-start and auto-installation of the terminal equipment and reduce R&D cost without adding CDs and expanding the flash memory.

## Description

### Field of the Invention

The present invention relates to the computer technology field, in particular to a method and a system for installing terminal equipment.

### Background of the Invention

As the use of mobile terminal equipment is becoming more popular, user's demand of interoperability between a mobile terminal and a computer is becoming higher, thus the mobile terminal is required to have comprehensive personal computer ("PC") applications and drivers, so as to realize various interactive operations between the computer and the terminal equipment.

Currently, there are two methods for installing applications and drivers of the terminal equipment to a host: one is to carve a compact disk; the other is to store applications and drivers in a flash memory of the terminal equipment.

Method one: after the terminal equipment is connected with the host, first it detects whether PC applications and drivers have been installed on the PC, if not, PC applications and drivers are installed by means of the Compact Disk ("CD"), and the PC can operate the terminal equipment after the installation is completed.

By this installation method, there is an inevitable need for manufacturers to provide installation CD, which would be a considerable cost for manufactures. For users, since the CD is needed for each use, if the CD is damaged or lost, then it cannot be used on the computer, which results in inconvenience and bad experience for users.

Method two: PC applications and drivers are first converted into a mirror image file, and then are stored in a flash memory of the terminal equipment. After the terminal equipment is connected with the host, the space storing the mirror image file in the flash memory is virtualized as a CD ROM and is presented to the host, and the host virtualizes a CD ROM device to convert the CD mirror image file stored in the flash memory into one of the data format complied with CD ROM, and then the host accesses the CD ROM as if it accesses a CD, so as to implement the installation of PC applications and drivers.

This installation method needs to store installation programs of PC applications and drivers in the flash memory of the terminal equipment, so that it requires the terminal equipment to have a large flash memory. Furthermore, in the processes of research and development ("R&D"), it requires to add procedures, such as virtualizing the flash memory as a CD to be presented, converting data format, and identifying the CD ROM device, and so on. Therefore, such a method will increase hardware cost and R&D cost. And, because the installation package is fixed in the flash memory, if an upgrade version of the installation package is issued, the software update can be performed only at the product after-sale services, which would cause a lot of trouble to users and the manufactures, and results in inconvenience for users.

In the process of implementing the present invention, it is contemplated by the inventor that the installation method of PC applications and drivers of the terminal equipment in prior art will results in a higher cost and inconvenience for users.

### Summery of the Invention

The purpose of the present invention is to solve the problem that the installation method of PC applications and drivers of the terminal equipment in prior art will results in a higher cost and inconvenience for users, and to provide a method and a system for installing terminal equipment.

One aspect of the present invention provides a method for installing terminal equipment, which includes that: after a host detects that a terminal equipment with a storage card is connected, enumerating the storage card as a U disk device; and when the host detects that installation files of PC applications and drivers stored in the storage card have not been installed, starting installation of the installation files by the host..

Preferably, in the present technical solution, enumerating the storage card as a U disk device includes: enumerating the storage card as a U disk device based on the bulk_only protocol (a block storage protocol).

Preferably, in the present technical solution, after enumerating the storage card as the U disk device, the method further includes: if the host detects that the installation files of the PC applications and drivers stored in the storage card have been installed, matching parameter PID values of the U disk, running the PC applications, and switching the terminal equipment to a U disk port coexistence mode.

In the present technical solution, the U disk port coexistence mode specifically includes: allowing performing operations on the terminal equipment, and/or performing U disk file operations on the storage card by means of application software.

In the present technical solution, the terminal equipment communicates with the host via the SCSI instruction set based on the bulk-only protocol, and the terminal communicates with the host via a USB interface.

Preferably, in the present technical solution, the postfix of the installation files is "inf".

Preferably, in the present technical solution, installation files of PC applications and drivers of different versions and/or for different terminal equipment models are stored in the storage card.

The other aspect of the present invention provides a system for installing terminal equipment, which includes: an enumeration module, configured for enumerating the storage card as a U disk device, after the connection of the terminal equipment with a storage card is detected; and an installation module, configured for starting the installation of the installation files on the host, if it is detected that installation files of PC applications and drivers stored in the storage card have not been installed.

Preferably, in the present technical solution, the enumeration module enumerates the storage card as the U disk device based on the bulk_only protocol.

Preferably, in the present technical solution, the system for installing terminal equipment also includes: a parameter matching module, configured for matching the parameter PID values of the U disk device, if it is detected that PC applications and drivers have been installed; and a state switching module, configured for switching the terminal equipment to a U disk port coexistence mode which specifically includes: allowing performing operations on the terminal, and/or performing U disk file operations on the storage card by means of application software.

In the present invention, if installation files of PC applications and drivers have been stored in the storage card, the host directly enumerates the storage card as the U disk and reports it as such, so as to realize auto-start and auto-installation of the terminal equipment and reduce R&D (research and development) cost without adding CDs and expanding the flash memory.

### Brief Description of the Drawings

The drawings herein are provided for the further understanding of the present invention and form a part of the specification, which are used to explain the present invention with embodiments of the present invention rather than limit the present invention. In the drawings:
Fig.1 is a flow chart of the method for installing terminal equipment according to Method Embodiment 2 of the present invention; and
Fig.2 is a schematic diagram of the system for installing terminal equipment according to Device Embodiment 2 of the present invention.

### Detailed Description of the Embodiments

The present invention will be described hereinafter in detail with reference to the drawings and in combination with embodiments. It should be noted that the embodiments of the present application and features thereof can be combined with each other.

### Method Embodiment 1:

This embodiment provides a method for installing terminal equipment, which includes that:
Step S102: after detecting that the terminal equipment with a storage card is connected, the host enumerates the storage card as a U disk device;
Step S104: when detecting that installation files of PC applications and drivers stored in the storage card have not been installed, the host starts the installation of the installation files.

In the present embodiment, if the installation files of PC applications and drivers have been stored in the storage card, the storage card is directly enumerated as a U disk and is reported as such, thus it is not required to use CDs and enlarge flash memories, so as to substantially save hardware cost for manufacturers, and realize auto-start and auto-installation of the terminal equipment. In addition, because there is no need to add the process of generating a virtual CD in the space of the flash memory which is needed in the prior art, the R&D (research and development) cost is also reduced.

### Method Embodiment 2:

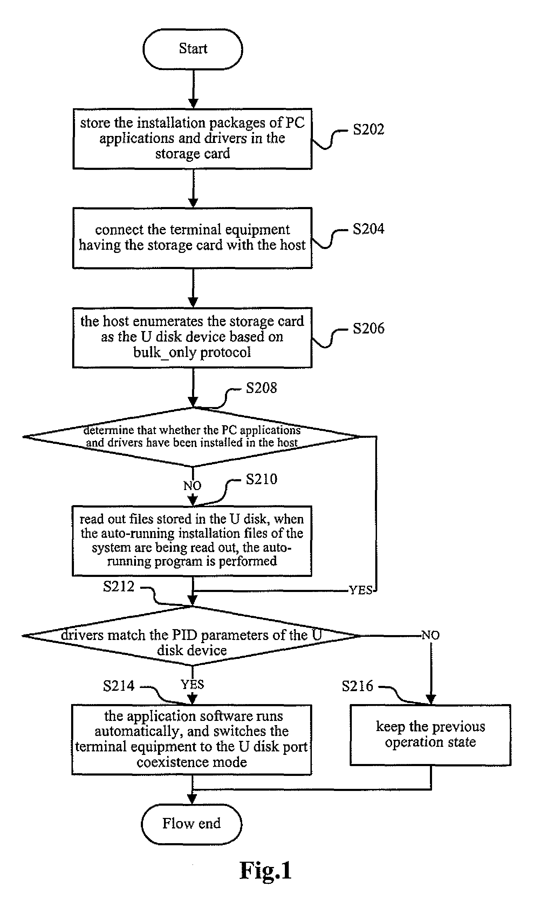

Fig.1 is a flow chart of the method for installing terminal equipment according to Method Embodiment 2 of the present invention. As shown in Fig.1, this embodiment includes:
Step S202, the installation package of PC applications and drivers is stored in the storage card;
Step S204, the terminal equipment with the storage card is connected with the host;
Step S206, the host enumerates the storage card as a U disk device based on bulk_only protocol;
Step S208, determine whether the PC applications and drivers have been installed in the host, if yes, the procedure goes to step S212, or else, goes to step S21 0;
Step S210, read the files stored in the U disk, when self-running installation files of the system, such as ones with a postfix of ".inf", are read, the self-running program is executed;
Step S212, the drivers match the PID parameters of the U disk device, if the matching is successful, the procedure goes to step S214, or else, goes to step S216;
Step S214, the application software runs automatically, and switches the terminal equipment to the U disk port coexistence mode, then the procedure ends;
Step S216, the previous operation state is kept, and the procedure ends.

In this embodiment, in step S202, the installation package of PC applications and drivers, which can be obtained in any manner such as downloaded from the internet, or transferred between storage media, is stored in the storage card; in step S206, the storage card is enumerated as a U disk device based on the bulk_only protocol, and various parameters of the U disk itself is reported to the host; and in step S214, the host sends the SCSI instructions for switching state to the terminal equipment, so as to instruct it to switch operation mode.

In this embodiment, the terminal equipment communicates with the host via the SCSI instruction set based on the bulk_only protocol. The storage card acting as mass storage equipment reports to the host, and the terminal communicates with the host via a USB interface.

This embodiment details individual steps in the Method Embodiment 1, and has all beneficial effects of above-mentioned embodiment, and auto-start and auto-installation of the terminal equipment can be realized, which will not be repeated herein for simplicity. In addition, in this embodiment, different versions of application software and drivers can be stored in the storage card, thus the auto-start and auto-installation of different versions of different terminal equipment can be realized on different hosts, so as to improve the easiness in equipment use, substantially facilitate the use for users and enhance user experience. Meanwhile, the upgrade and update problems of the version can be solved by means of the method in the present invention, without returning the terminal equipment to an after-sale branch to perform version upgrade, which saves a lot of time and money both for users and manufactures.

### Device Embodiment 1:

This embodiment discloses a system for installing terminal equipment, which includes: an enumeration module, for enumerating the storage card as a U disk device, after the connection of the terminal equipment with a storage card is detected; and an installation module, for starting the installation of installation files, if the host detects that installation files of PC applications and drivers stored in the storage card have not been installed.

Since the system for installing terminal equipment in this embodiment relates to interaction between a host and a terminal equipment, from another perspective, the present system can include a terminal equipment and a host, wherein the enumeration module and the installation module can be located in the terminal equipment or the host. In addition, the terminal equipment can include a storage card, for storing an installation package, wherein, the installation package is divided into two parts, such as an installation package of application software and an installation package of drivers, wherein, the installation package of drivers can also be divided into three modules: a driver module, a parameter matching and detecting module, and a state switching module.

Wherein, the driver module is used to communicate between the PC and PC applications after the PC applications have been installed; the parameter matching and detecting module is used to match the parameter PID values of the U disk device, if it is detected that PC applications and drivers have been installed; and the state switching module is used to switch the terminal equipment to the U disk port coexistence mode, which specifically includes: allowing performing operations on the terminal, and/or performing U disk file operations on the storage card by means of application software.

This embodiment provides a system for realizing auto-start and auto-installation of a terminal equipment. In this embodiment, because the storage card is enumerated as a U disk and is directly reported, it does not need to add the process of generating a virtual CD in a space of the flash memory, and therefore reduces R&D cost. Because the present invention does not need to add CDs and expand the flash memory, the hardware cost for manufacturers is also reduced substantially. In addition, because the existing storage card has a very large capacity and can be reused, different versions of application software and drivers can be stored in the storage card, thus the auto-start and auto-installation of different versions of different terminal equipment can be realized on different hosts, so as to improve the easiness in equipment use, substantially facilitate the use for users and enhance user experience. Meanwhile, the upgrade and update problems of the version can be solved by means of the method in the present invention, without returning the terminal equipment to an after-sale branch to perform version upgrade, which saves a lot of time and money both for users and manufactures.

### Device Embodiment 2:

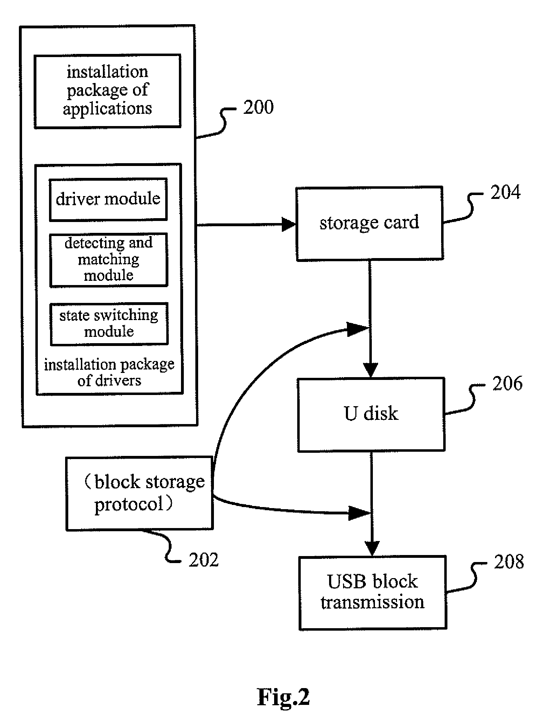

Fig.2 is a schematic diagram of the system for installing terminal equipment according to Device Embodiment 2 of the present invention. As shown in Fig.2, the system includes a terminal equipment and a host, wherein the terminal equipment contains a storage card 204, in which installation files 200 of applications and drivers are stored, wherein the installation files of drivers include three modules: a driver module, a parameter matching and detecting module, and a state switching module. When the terminal equipment with a storage card 204 is connected with the host, the storage card 204 is enumerated as a U disk 206 via bulk_only protocol 302. When drivers and applications have been installed in the host, the host first obtains parameter values of the terminal equipment, if the PID values matches, an extended SCSI instruction 202 is sent to make the terminal equipment switch to the U disk port coexistence mode, otherwise, files in the U disk 206 are read out. When auto-run files of the system are read out, auto-start and auto-installation of the terminal equipment can be realized via the USB block transmission 208.

In this embodiment, the terminal equipment communicates with the host via the SCSI instruction set based on the bulk_only protocol, the storage card is reported to the host as a mass storage device, and the terminal communicates with the host via the USB interface. For the realization method and the benefit effects of the present invention, reference can be made to related description in Method Embodiments 1 or 2, which will not be repeated herein for simplicity.

Obviously, those skilled in the art should understand that individual modules and steps of the present invention can be implemented with general computation devices integrated together or distributed in the network formed by a plurality of computation devices. Alternatively, the present invention can be implemented by program codes executable by computation devices, which can be stored in memory devices for execution by the computation devices. In some cases, the present invention can be implemented by steps of different sequences as described above. Also, the present invention can be implemented with ICs, or several modules or steps can be implemented with a single IC. Thus, the present invention is not limited to any particular hardware and software combination.

Above description is to illustrate the preferred embodiments, and not to limit the present invention. To those skilled in the art, the present invention can have various alterations and changes. The scope defined in the claims shall comprise any modification, equivalent substitution and improvement within the principle of the present invention.

## Claims

1. A method for installing a terminal equipment, **characterized by** comprising:
after a host detects that a terminal equipment with a storage card is connected, enumerating the storage card as a U disk device; and
when the host detects that installation files of PC applications and drivers stored in the storage card have not been installed, starting installation of the installation files by the host.

2. The method according to Claim 1, **characterized in that** the step of enumerating the storage card as a U disk device includes:
enumerating the storage card as a U disk device based on the bulk_only protocol.

3. The method according to Claim 1, **characterized in that** after the storage card is enumerated as a U disk device, the method further includes:
if the host detects that the installation files of the PC applications and drivers stored in the storage card have been installed, matching parameter PID values of the U disk device, running the PC applications, and switching the terminal equipment to a U disk port coexistence mode.

4. The method according to Claim 3, **characterized in that** the U disk port coexistence mode includes:
allowing performing operations on the terminal equipment, and/or performing U disk file operations on the storage card by means of application software.

5. The method according to any one of Claims 1 to 4, **characterized in that**:
the terminal equipment communicates with the host via the SCSI instruction set based on the bulk_only protocol, and the terminal communicates with the host via a USB interface.

6. The method according to any one of Claims 1 to 4, **characterized in that**: the postfix of the installation files is "inf".

7. The method according to any one of Claims 1 to 4, **characterized in that**:
the installation files of the PC applications and drivers of different versions and/or for different terminal equipment models are stored in the storage card.

8. A system for installing terminal equipment, **characterized by** comprising:
an enumeration module, for enumerating a storage card as a U disk device, after it is detected that a terminal equipment with a storage card is connected; and
an installation module, for starting to install installation files of PC applications and drivers, if it is detected that the installation files of the PC applications and drivers stored in the storage card have not been installed.

9. The system according to Claim 8, **characterized in that** the enumeration module enumerates the storage card as a U disk based on the bulk_only protocol.

10. The system according to Claim 8, **characterized in that** the system further includes:
a parameter matching module, for matching parameter PID values of the U disk device, if it is detected that the PC applications and drivers have been installed; and
a state switching module, for switching the terminal equipment to a U disk port coexistence mode, wherein the U disk port coexistence mode includes: allowing performing operations on the terminal equipment, and/or performing U disk file operations on the storage card by means of application software.
